# EUROPEAN PATENT APPLICATION

(11) **EP 2 651 195 A1**
(43) Date of publication of application: **16.10.2013**
(21) Application number: 12164039.5
(22) Date of filing: 13.04.2012
(51) Int. Cl.: H05B 41/288

(54) **A circuit, a method and an arrangement for operating a self-oscillating half-bridge supplying power to a lamp**

(71) Applicant: Helvar Oy Ab, 03600 Karkkila (FI)
(72) Inventor: Vihinen, Hannu, FI-03600 Karkkila (FI)
(74) Representative: Berggren Oy Ab

(57) **Abstract**

A circuit, a method and an arrangement for operating a bridge circuit are provided. The circuit comprises a start-up circuit for initiating the operation of the bridge circuit, the start-up circuit comprising a capacitive element for receiving a charge upon start-up of the bridge circuit, and a charge controller for providing a start-up signal for initiating the operation of the bridge circuit in response to a voltage at the capacitive element exceeding a predetermined threshold. The circuit further comprises a control circuit for discharging the capacitive element before the voltage thereat reaching the predetermined threshold during operation of the bridge circuit, wherein the control circuit is coupled to the start-up circuit and arranged to receive a control signal from a cathode circuit of the lamp circuit, the control circuit being configured to discharge the capacitive element in response to the control signal.

## Description

### FIELD OF THE INVENTION

The invention relates to operation of power supply circuit arranged to supply power to a lamp. In particular, the invention relates to a circuit, a method and an arrangement for operating a half-bridge circuit arranged to supply power to a lamp, such as a fluorescent lamp.

### BACKGROUND OF THE INVENTION

A power converter circuit may be used for example to convert direct current (DC) or alternating current (AC) from one voltage level to another, to convert DC to AC, or to convert AC to DC.

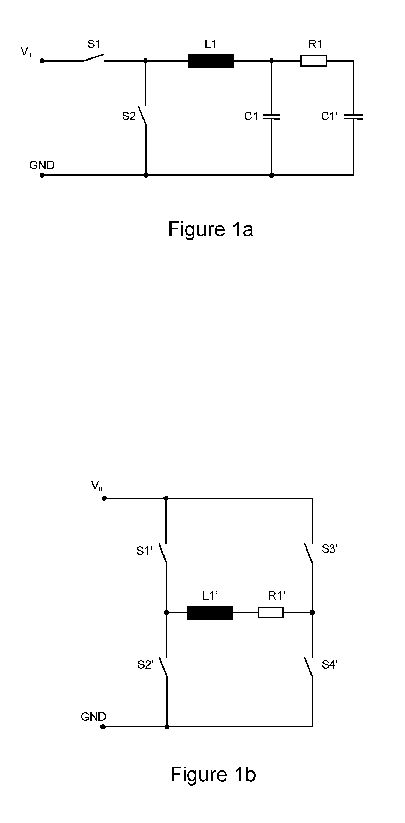

An example of a power converter circuit is a half-bridge circuit, which can be used for example to convert DC to AC. A basic structure of a half-bridge circuit is illustrated in Figure 1 a. As a brief summary of the operation, the pair of switches S1 and S2 are operated in such a manner that when the switch S1 is in closed state, the switch S2 is in open state and vice versa. When the switch S1 is in closed state and the switch S2 is in open state, electric current flows through the switch S1 and through the inductor L1 towards the load represented by the resistor R'. Conversely, when the switch S1 is in open state and the switch S2 is in closed state, electric current flows via the inductor L1 through the switch S2 toward the ground potential GND. Moreover, the switches S1 and S2 are not allowed to be in closed state at the same time, since it would cause a short circuit on the input voltage source represented by the potentials Vᵢₙ and GND. Setting the switches S1 and S2 into open and closed state at a suitable frequency results in a desired alternating electric current via the inductor L1 - and hence to the load represented by a resistor R1. The switch S1 may be considered as a high side switch of the half-bridge circuit due to being connected to the voltage source Vᵢₙ in a high potential whereas the switch S2 connected to a low potential represented by the ground potential GND may be considered as a low side switch of the half-bridge circuit.

Another example of a power converter circuit is a full bridge circuit, which can also be used to convert DC to AC. A basic structure of a full bridge circuit is illustrated in Figure 1 b. As a brief summary of the operation, the first pair of switches S1' and S2' and the second pair of switches S3' and S4' are operated in such a way that when the switches S1' and S4' are in closed state, the switches S2' and S3' are in open state - and vice versa. The resistor R1' represents a load connected/coupled to the full bridge circuit via the inductor L1'. When the switches S1' and S4' are in closed state, electric current flows from Vᵢₙ via the switch S1', the inductor L1' the resistor R1' and the switch S4' towards GND, whereas when the switches S2', and S3' are in closed state, electric current flows from Vᵢₙ via the switch S3', the resistor R1', the inductor L1' and the switch S2' towards GND. Moreover, the switches of a pair, i.e. the switches S1' and S2' and/or the switches S3' and S4', are not allowed to be in closed state at the same time, since it would cause a short circuit on the input voltage source represented by the potentials Vᵢₙ and GND. Setting the switches S1', S2', S3' and S4' into open and closed state at a suitable frequency results in a desired alternating electric current via the inductor L1' - and hence to the load represented by a resistor R1'. Along the lines of terminology used with the half-bridge circuit, the switches S1' and S3' may be considered as high side switches of the full bridge circuit, whereas the switches S2' and S4' may be considered as low side switches of the full bridge circuit.

A power supply, such as a half-bridge circuit or a full bridge circuit described hereinbefore, may be arranged to supply power to a lighting element, such as a fluorescent lamp, a high-intensity discharge (HID) lamp, a light emitting diode (LED), etc. In particular, the power supply may be coupled to a resonant circuit comprising an inductor and a capacitor, e.g. the inductor L1 and the capacitor C1 of the half-bridge circuit, such that the resonant circuit receiving power from the power supply is configured to drive operation of the power supply via an feedback arrangement, the power supply and the resonant circuit thereby constituting a self-oscillating half-bridge arrangement supplying power to a light element coupled thereto.

A challenge in such an arrangement is to provide an arrangement that is small in size and that may be manufactured at a reasonable cost without compromising the performance and/or efficiency of the arrangement.

### SUMMARY OF THE INVENTION

It is an object of the present invention to provide a circuit, a method and an arrangement for operating a power supply circuit arranged to supply power to a lamp, the circuit or the arrangement being small in size and enabling manufacturing at a reasonable cost without compromising the performance and/or efficiency thereof.

The objects of the invention are reached by a circuit, a method and an arrangement as defined by the respective independent claims.

According to a first aspect of the invention a circuit for operating a bridge circuit arranged to supply power to a lamp circuit is provided. The circuit comprises a start-up circuit for initiating the operation of the bridge circuit, the start-up circuit comprising a capacitive element for receiving a charge upon start-up of the bridge circuit, and a charge controller for providing a start-up signal for initiating the operation of the bridge circuit in response to a voltage at the capacitive element exceeding a predetermined threshold. The circuit further comprises a control circuit for discharging the capacitive element before the voltage thereat reaching the predetermined threshold during operation of the bridge circuit, wherein the control circuit is coupled to the start-up circuit and arranged to receive a control signal from a cathode circuit of the lamp circuit, the control circuit being configured to discharge the capacitive element in response to the control signal.

According to a second aspect of the invention a method for operating a bridge circuit arranged to supply power to a lamp circuit is provided. The method comprises receiving a charge at a capacitive element upon start-up of the bridge circuit, providing a start-up signal for initiating the operation of the bridge circuit in response to a voltage at the capacitive element exceeding a predetermined threshold, and discharging the capacitive element before the voltage thereat reaching the predetermined threshold during operation of the bridge circuit, wherein discharging the capacitive element comprises discharging the capacitive element in response to a control signal received from a cathode circuit of the lamp the lamp circuit.

According to a third aspect of the invention an arrangement comprising a bridge circuit connectable between a voltage source and a ground potential, a resonant circuit coupled to the bridge circuit, a lamp circuit coupled to the resonant circuit, the lamp circuit comprising a cathode circuit and a circuit in accordance with the first aspect of the invention having the start-up circuit coupled to a control terminal of a switch of the bridge circuit and the control circuit coupled to the cathode circuit of the lamp circuit.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

Figure 1 a schematically illustrates a half-bridge circuit as an example of a power supply circuit.
Figure 1b schematically illustrates a full bridge circuit as an example of a power supply circuit.
Figure 2 schematically illustrates an exemplifying arrangement comprising a circuit according to an embodiment of the invention.
Figure 3 schematically illustrates an exemplifying arrangement comprising a circuit according to an embodiment of the invention.
Figure 4a schematically illustrates an exemplifying start-up circuit according to an embodiment of the invention.
Figure 4b schematically illustrates an exemplifying start-up circuit according to an embodiment of the invention.
Figure 5a schematically illustrates an exemplifying arrangement comprising a control circuit according to an embodiment of the invention.
Figure 5b schematically illustrates an exemplifying arrangement comprising a control circuit according to an embodiment of the invention.
Figure 5c schematically illustrates an exemplifying arrangement comprising a control circuit according to an embodiment of the invention.
Figure 6 illustrates a flowchart describing a method according to an embodiment of the invention.

### DETAILED DESCRIPTION

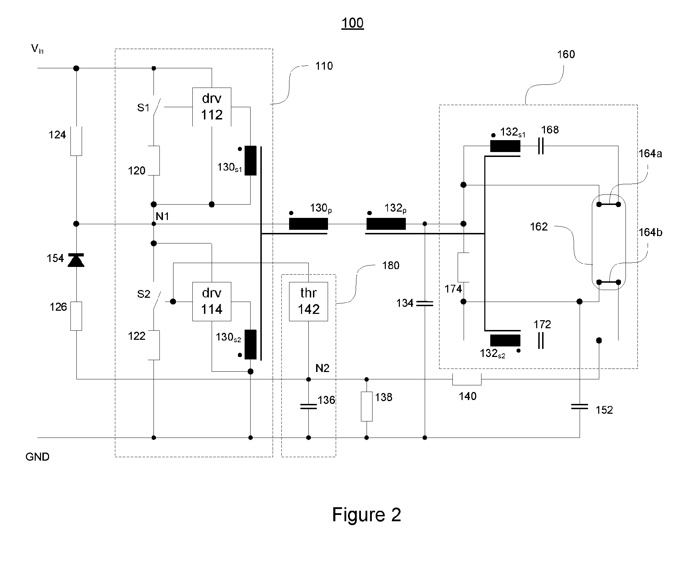

Figure 2 schematically illustrates an exemplifying arrangement 100 comprising a half-bridge circuit 110 arranged to supply power to a lamp circuit 160 comprising a fluorescent lamp 162. In the arrangement 100 the half-bridge may be replaced with a power converter of other type providing AC at its output, for example with a full bridge circuit described hereinbefore or with another suitable arrangement. Since illustrated by using a half-bridge circuit 110 as an example of power supply, the arrangement 100 may be also referred to as a half-bridge arrangement or a bridge arrangement.

In the arrangement 100 the half-bridge circuit 110 comprises a high side driving circuit 112 for driving the high side switch S1, the driving circuit 112 being coupled to a control terminal of the high side switch S1. The high side switch S1 is connected in series with a resistor 120 between a node Vᵢₙ and a mid-point of the half-bridge-circuit, indicated by a node N1. The node Vᵢₙ is connectable to a suitable input potential or input voltage. The node Vᵢₙ is further coupled to the driving circuit 112 and to the node N1 via a resistor 124, and the driving circuit 112 is also coupled to the node N1 - both directly and via an inductor 130ₛ₁. The half-bridge circuit 110 further comprises a low side driving circuit 114 for driving the low side switch S2, the driving circuit 114 being coupled to a control terminal of the low side switch S2. The driving circuit 114 is further coupled to the ground potential GND - both directly and via an inductor 130ₛ₂. The low side switch S2 is connected in series with a resistor 122 between the node N1 and the ground potential GND.

The switches S1 and S2 may be implemented for example as bipolar junction transistors (BJT) or field-effect transistors (FET) of desired characteristics, as described in more detail hereinafter. Driving circuits 112 and 114 suitable for driving the switches S1 and S2 of the half-bridge circuit 110 in a manner described hereinbefore are known in the art and hence details of the driving circuits 112, 114 are not described herein.

In the exemplifying arrangement 100 the half-bridge circuit 110 is coupled via an inductor 130ₚ to a resonant circuit formed by an inductor 132ₚ and a capacitor 134 connected in series between the node N1 and the ground potential GND. The inductor 132ₚ may be referred to as a resonant inductor and the capacitor 134 may be referred to as a resonant capacitor. A resonant circuit may also be referred to as an LC circuit. The resonant circuit is driven by the half-bridge circuit 110, while on the other hand the 'output' of the resonant circuit is fed back to control operation of the half-bridge circuit 110 due to the inductor 130ₚ being mutually coupled with the inductors 130ₛ₁ and 130ₛ₂. Hence, electric current flowing via the inductor 130ₚ induces voltages in the inductors 130ₛ₁ and 130ₛ₂, serving as control signals for the driving circuits 112 and 114, respectively.

The mutual coupling between the inductors 130ₚ, 130ₛ₁ and 130ₛ₂ may be provided for example by implementing the inductors 130ₚ, 130ₛ₁ and 130ₛ₂ as windings around a shared core, thereby forming a transformer arrangement. In particular, such a transformer arrangement may implemented with the winding corresponding the inductor 130ₚ acting as a primary winding and the windings corresponding to the inductors 130ₛ₁ and 130ₛ₂ acting as secondary windings. The number of turns of such a transformer arrangement may be equal for each of the inductors 130ₚ, 130ₛ₁ and 130ₛ₂ or, as another example, the number of turns implementing the inductor 130ₛ₁ may be the same than that implementing the inductor 130ₛ₂ with the number of turns implementing the inductor 130ₚ being e.g. twice or three times the number of turns implementing the inductor 130ₛ₁ or 130ₛ₂. An example of such a transformer arrangement is to implement the inductors 130ₚ, 130ₛ₁ and 130ₛ₂ as windings around a toroid to form a toroidal transformer having desired characteristics.

The resonant circuit, as known in the art, may be driven to result in an oscillating behavior at a frequency depending on the characteristics of the inductor 132ₚ and the capacitor 134 as well as on characteristics of the electric current supplied thereto from the half-bridge circuit 110, thereby forming a self-oscillating bridge arrangement supplying AC having desired characteristics with respect to frequency and amplitude to a load coupled thereto.

As already referred to hereinbefore, the exemplifying arrangement 100 comprises the resonant circuit coupling the half-bridge circuit 110 to the lamp circuit 160. The lamp circuit 160 is coupled to the resonant circuit to a node between the inductor 132ₚ and the capacitor 134. Hence, the lamp circuit 160 constitutes the load to the self-oscillating bridge arrangement formed by the half-bridge circuit 110 and the resonant circuit. The lamp circuit 160 comprises an inductor 132ₛ₁ connected in series with a capacitor 168 and back to itself via the first pair of terminals 164a arranged to receive a (first) electrode of the fluorescent lamp 162, hence constituting a first cathode circuit of the lamp circuit 160. The lamp circuit 160 further comprises an inductor 132ₛ₂ connected in series with a capacitor 172 and back to itself via a second pair of terminals 164b arranged to receive a (second) electrode of the fluorescent lamp 162, thereby constituting a second cathode circuit of the lamp circuit 160. The lamp circuit 160 further comprises a resistor 174 via which the first and second cathode circuits are coupled to each other. The inductors 132ₛ₁ and 132ₛ₂ are mutually coupled with the inductor 132ₚ, hence having a voltage induced thereto in response to electric current flowing via the inductor 132ₚ.

The mutual coupling between the inductors 132ₚ, 132ₛ₁ and 132ₛ₂ may be arranged for example by implementing the inductors 132ₚ, 132ₛ₁ and 132ₛ₂ as separate windings around a shared core, thereby forming a transformer arrangement. An example of such a transformer arrangement is to arrange the winding implementing the inductors 132ₚ, 132ₛ₁ and 132ₛ₂ such that the winding corresponding to the inductor 132ₚ acts as a primary winding and the windings corresponding to the inductors 132ₛ₁ and 132ₛ₂ act as secondary windings. The number of turns used for the primary winding is typically an order of magnitude higher than the number of turns used for the secondary windings. The ratio between the number of turns in the primary winding and the secondary windings may be for example in the range from 10 to 50, in particular 25. As an example of this particular example, the number of turns in the windings corresponding to the inductors 132ₛ₁ and 132ₛ₂ may be 6, whereas the number of turns in the winding corresponding to the inductor 132ₚ may be 150.

The second cathode circuit of the lamp circuit 160 is further coupled to the ground potential GND via a DC capacitor 152, which is arranged to prevent DC current from passing. The lamp circuit 160 is further coupled to a node N2 via a resistor 140. The exemplifying half-bridge arrangement 100 further connects the node N2 via a resistor 126 and a diode 154 to the mid-point of the half-bridge circuit, i.e. to the node N1.

The exemplifying arrangement 100 further comprises a start-up circuit 180 coupled to the low side switch S2. The start-up circuit 180 comprises a capacitor 136 and a voltage threshold element 142, operation of which is described in more detail hereinafter. The capacitor 136 is coupled between the node N2 and the ground potential GND, hence in parallel with a resistor 138, whereas the voltage threshold element 142 is coupled between the capacitor 136 and the control terminal of the low side switch S2.

Upon initiating the exemplifying arrangement 100 when both the high side switch S1 and the low side switch S2 are in open state, e.g. by connecting the an appropriate input voltage to the node Vᵢₙ or by placing a lamp in its place to close the circuit between the first and second pairs of terminals 164a, 164b, the capacitor 136 receives a charge from the node Vᵢₙ via the resistor 124, the inductors 130ₚ and 132ₚ, the resistor 174, the pair of terminals 164b and the resistor 140. In other words, the capacitor 136 of the start-up circuit 180 is arranged to receive a charge upon start-up of the half-bridge arrangement 100. At the same time the capacitor 134 is charged at a potential sufficient to start the oscillating behavior of the arrangement 100. In particular, such start-up of the arrangement 100 may occur when switching on power to an apparatus comprising the arrangement 100 or when placing a lamp in its place in an apparatus comprising the arrangement 100.

The voltage threshold element 142 of the start-up circuit 180 is configured to operate such that it does not conduct electric current until a voltage exceeding a predetermined threshold voltage has been applied thereto, whereas in response to the voltage exceeding the predetermined threshold voltage being applied thereto the voltage threshold element 142 conducts until the electric current drops below a predetermined threshold current, after which the voltage threshold element 142 returns to the non-conducting state.

Thus, in response to a voltage at the capacitor 136 exceeding the predetermined threshold voltage, the voltage threshold element 142 causes the capacitor 136 to discharge to the control terminal of the low side switch S2, resulting in setting the low side switch S2 into closed state and starting the operation of the self-oscillating bridge arrangement. In other words, a start-up signal for initiating the operation of the arrangement 100 is provided in response to the voltage at the capacitor 136 exceeding the predetermined threshold voltage. While the self-oscillating bridge arrangement is in operation, each time the low side switch S2 is in open state - and the high side switch S1 is in closed state - the voltage at the point N1 is (close to) that of the input voltage at Vᵢₙ and the capacitor 136 starts to charge as in the case of initiating the operation of the arrangement 100. On the other hand, each time the low side switch S2 is in closed state - and the high side switch S1 is in open state - the voltage at the point N1 becomes that of the voltage at the ground potential GND, e.g. essentially zero, thereby causing the capacitor 136 to discharge via the resistor 126 and the diode 154 before the voltage at the capacitor 136 reaches the predetermined threshold voltage that would cause the voltage threshold element 142 to connect the capacitor 136 to the control terminal of the low side switch S2. The sequence from setting the high side switch S1 into closed state and the low side switch S2 into open state, followed by setting the high side switch S1 into open state and the low side switch S2 into closed state, until it is again time to set the high side switch S1 into closed state and the low side switch S2 into open state may be referred to as an operation cycle of the arrangement 100. Such operation cycles are repeated in order to cause a desired alternating current in the lamp circuit 160.

Since during operation of the arrangement 100 the low side switch S2 is periodically switched into open state and into closed state at the oscillation frequency of the arrangement 100, the capacitor 136 is periodically charged and discharged, respectively. With suitable selection of the characteristics of the capacitor 136 in view of the oscillation frequency of the arrangement 100 the voltage at the capacitor 136 is discharged via the diode 154 before it reaches the predetermined threshold voltage, thereby avoiding re-starting the operation of the arrangement 100 during its normal operation.

In this regard, the diode 154 may be considered to serve as a control circuit for discharging the capacitor 136 during operation of the half-bridge arrangement 100 before the voltage at the capacitor 136 reaches the predetermined threshold voltage of the voltage threshold element 142. Moreover, the discharging may be considered to take place in response to a control signal issued to set the low side switch S2 into closed state resulting in the capacitor 136 discharging via the diode 154, as described hereinbefore.

While using the diode 154 as the control circuit is a straightforward arrangement for periodically discharging the capacitor 136 during operation of the half-bridge arrangement 100, a drawback of such an arrangement is that the diode 154 must be able to tolerate voltages issued at the node N1 via the high side switch S1 from the node Vᵢₙ that may be several hundreds of volts. As an example, the operating voltage applied to the node Vᵢₙ may be of the order of hundreds of volts, for example around 400 volts. Consequently, a diode component that is rather large in size and possibly also expensive must be employed as the diode 154 in order to guarantee tolerance to voltages required to operate the lamp 162.

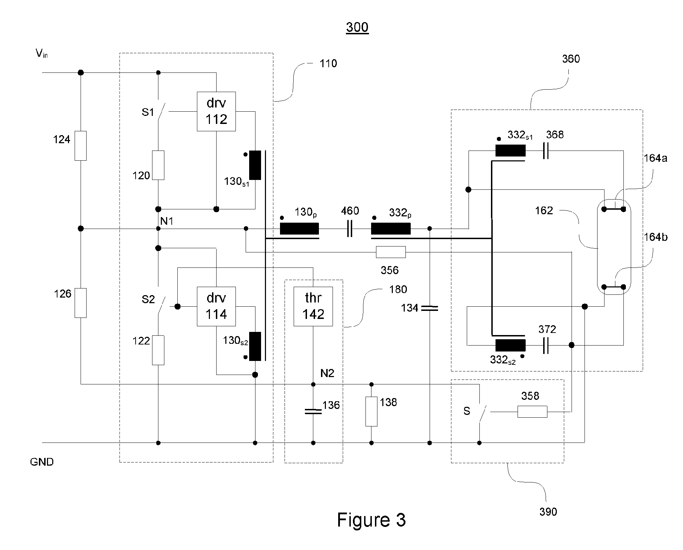

Figure 3 illustrates exemplifying arrangement 300. Like the arrangement 100, also the arrangement 300 may be also referred to as a bridge arrangement or as a half-bridge arrangement. The arrangement 300 shares a number of components with the arrangement 100, and hence the components and operation associated therewith are described in detail only to extent they differ from the arrangement 100.

In the arrangement 300, the structure of the half-bridge circuit 110 is similar to that of the arrangement 100. The structure of the resonant circuit formed by the inductor 332ₚ and the capacitor 334 is similar to that formed by the inductor 132ₚ and the capacitor 134 in the arrangement 100. On the other hand, the lamp circuit 360 is different from the lamp circuit 160. Like the lamp circuit 160, also the lamp circuit 360 comprises an inductor 332ₛ₁ connected in series with a capacitor 468 and back to itself via the first pair of terminals 164a arranged to receive a (first) electrode of the fluorescent lamp 162, thus constituting a first cathode circuit of the lamp circuit 160. The lamp circuit 340 further comprises an inductor 332ₛ₂ connected in series with a capacitor 472 and back to itself via a second pair of terminals 164b arranged to receive a (second) electrode of the fluorescent lamp 162, hence constituting a second cathode circuit of the lamp circuit 360. However, the first and second cathode circuits of the lamp circuit 360 are not directly coupled to each other, but the first cathode circuit is coupled via the inductor 332ₚ, a DC capacitor 360 and the inductor 130ₚ to the node N1, while the second cathode circuit is connected to the node N1 via a resistor 356. Similar to the lamp circuit 160, the inductors 332ₛ₁ and 332ₛ₂ are mutually coupled with the inductor 332ₚ, hence having a voltage induced thereto in response to electric current flowing via the inductor 332ₚ as described hereinbefore in context of the inductors 132ₚ, 132ₛ₁ and 132ₛ₂ of the lamp circuit 160. The considerations hereinbefore with respect to the structure of a transformer arrangement formed by the inductors 132ₚ, 132ₛ₁ and 132ₛ₂ apply also to the transformer arrangement formed by the inductors 332ₚ, 332ₛ₁ and 332ₛ₂.

The second cathode circuit of the lamp circuit 360 is further coupled to the ground potential GND. A difference to the arrangement 100 in this regard is that the DC capacitor 152 of the arrangement 100 is omitted and replaced with the DC capacitor 360 coupled between the inductor 132ₚ and the node N1. In a variation of the arrangement 300 the DC capacitor 360 may be coupled to another position between the half-bridge circuit 110 and the lamp circuit 360, for example between the node N1 and the inductor 130ₚ or between the inductor 132ₚ and the lamp circuit 360.

As a further difference to the arrangement 100, the arrangement 300 comprises a control circuit 390 coupled to the start-up circuit 180 for discharging the capacitor 136, the control circuit 390 comprising a resistor 358 and a control switch S. The control circuit 390 is arranged to receive a control signal from the (lower) cathode circuit of the lamp circuit 360, and the control circuit 390 is hence configured to discharge the capacitor 136 in response to the control signal. In particular, the control switch S is connected in parallel with the capacitor 136 with a control terminal of the control switch S coupled to the (lower) cathode circuit of the lamp circuit 360 via the resistor 358.

As a yet another difference to the arrangement 100, in the arrangement 300 the node N2 is coupled to the node N1 via the resistor 126, thereby omitting the diode 154 constituting the control circuit of the arrangement 100.

Upon initiating the exemplifying arrangement 300, e.g. by connecting the an appropriate input voltage to the node Vᵢₙ or by placing a lamp in its place to close the circuit between the first and second pairs of terminals 164a, 164b, the capacitor 136 receives a charge from the node Vᵢₙ via the resistor 124 and the resistor 126. In other words, the capacitor 136 is arranged to receive a charge upon start-up of the half-bridge arrangement 300. At the same time the capacitor 134 is charged via the resistor 124, the inductor 130ₚ, the DC capacitor 360 and the inductor 132ₚ at a potential sufficient to start the oscillating behavior of the arrangement 300.

The operation of the start-up circuit 180 within the arrangement 300, is basically similar to that of the arrangement 100 with the exception that the capacitor 136, i.e. the capacitive element of the start-up circuit 180, does not only receive the charge upon start-up of the arrangement 300 but due to being continuously coupled to the node Vᵢₙ it, consequently, continuously receives a charge via the resistors 124 and 126 from the node Vᵢₙ also during operation of the arrangement 300.

Thus, while the self-oscillating bridge arrangement is in operation, the capacitor 136 continues to be coupled to the node Vᵢₙ via the resistors 124 and 126 thereby continuously receiving a charge therefrom. During normal operation of the arrangement 300, due to mutual coupling with the inductor 132ₚ, a voltage is periodically induced in the inductor 132ₛ₂ due to alternating current flowing via the inductor 132ₚ in accordance with the oscillation frequency of the resonant circuit. This, in turn, causes a control signal being issued from the (second) cathode circuit of the lamp circuit 360 to the control circuit 390. In particular, the control signal is periodically issued to the control terminal of the control switch S via the resistor 358, consequently (periodically) setting the control switch S in closed state and causing the capacitor 136 to discharge via the control switch S.

The capacitor 136 may be considered to constitute a capacitive element for receiving a charge upon start-up of the half-bridge arrangement 100. Instead of a single capacitor, the capacitive element may comprise a number of capacitors connected in parallel and/or a number of capacitors connected in series to implement a capacitive element acting as a charge storage of desired characteristics. Moreover, an arrangement other than one or more capacitors may be employed as the capacitive element for implementing the charge storage function of the capacitive element in order to enable building up a voltage sufficient to initiate the operation of the half-bridge arrangement 100 in view of the characteristics of the voltage threshold element 142.

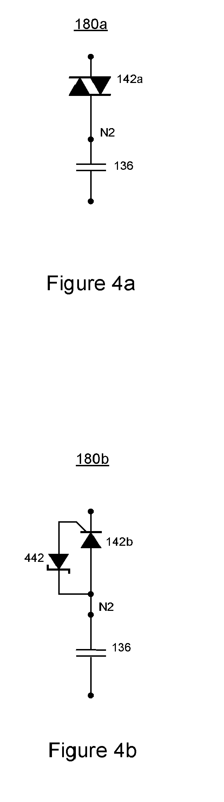

The voltage threshold element 142 may be considered to constitute a charge controller for providing a start-up signal for initiating the operation of the half-bridge arrangement 100 in response to a voltage at the capacitive element exceeding a predetermined threshold, e.g. a voltage at the capacitor 136 exceeding the predetermined threshold voltage. The charge controller may comprise for example a diac having a desired breakdown voltage and holding current as the voltage threshold element 142, the breakdown voltage hence determining the predetermined threshold voltage and the holding current determining the predetermined threshold current. Figure 4a illustrates a start-up circuit 180a comprising a diac 142a as the charge controller. As an example, the diac having a threshold voltage in the range from 20 to 40 volts, e.g. 32 volts, may be employed.

As another example, the charge controller may comprise a Zener diode arranged to have its forward direction towards the node N2 and having a desired breakdown voltage arranged to allow the electric current flow to the reverse direction towards the control terminal of the low side switch S2 only in response to the voltage at the capacitive element, e.g. the capacitor 136, exceeding the breakdown voltage of the Zener diode. In a variation of such an approach the charge controller may comprise a second diode arranged to have its forward direction towards the control terminal of the low side switch S2, thereby preventing the electric current from flowing from the control terminal of the low side switch S2 towards the node N2. In a further variation the second diode is replaced with a Zener diode having a (second) desired breakdown voltage, thereby allowing the electric current to flow towards the node N2 only in response to a voltage exceeding the (second) desired breakdown voltage.

As a further example, the charge controller may comprise a thyristor arranged to have its forward direction towards the control terminal of the low side switch S2, i.e. having its anode coupled to the node N2 and its cathode coupled to the control terminal of the low side switch S2. Moreover, the gate of the thyristor is coupled to the node N2. Figure 4b illustrates a start-up circuit 180b comprising a thyristor 142b as the charge controller. The thyristor 142b has its gate coupled to the node N2 via a Zener diode 442. The thyristor 142b does not conduct in its forward direction even though the voltage applied to its cathode from the capacitor 136 via the node N2 until the voltage applied at the gate of the thyristor 142b exceeds a predetermined threshold that depends on characteristics of the component employed as the thyristor 142b. On the other hand, in response to the voltage applied at the gate exceeding the predetermined threshold, the thyristor 142b conducts in its forward direction until the electric current via the thyristor falls below a predetermined holding current that depends on characteristics of the component employed as the thyristor 142. The Zener diode 442 having a suitable breakdown voltage is included in the exemplifying start-up circuit 180b to ensure that the thyristor 142b is not set into the conducting state in response to a voltage that is not sufficiently high to cause starting up the operation of the arrangement 100.

The control circuit 390 may be embodied in a number of different ways. A few non-limiting examples are described in the following.

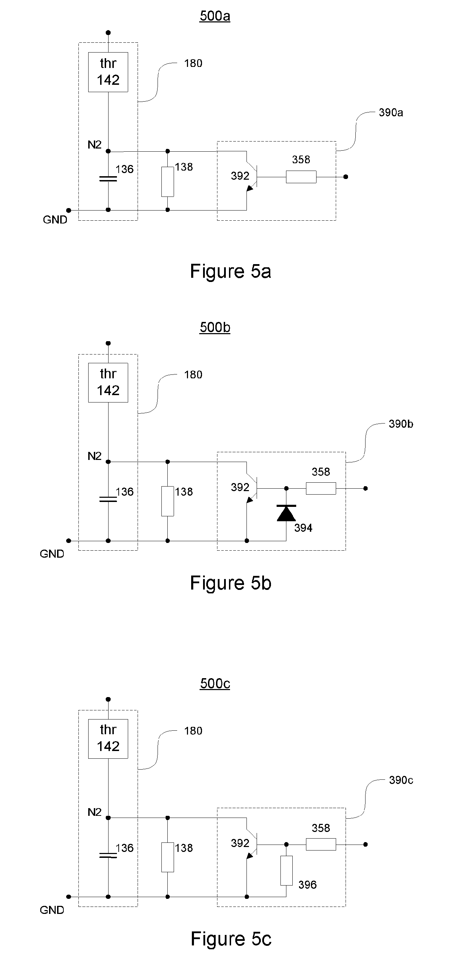

The control switch S may implemented for example as a suitable bipolar junction transistor (BJT) having its base coupled to the resistor 358, having its collector coupled to the node N2, and having its emitter coupled to the ground potential GND. In this regard, an exemplifying arrangement 500a comprising an exemplifying control circuit 390a is schematically illustrated in Figure 5a. The control circuit 390a comprises a BJT 392 implementing the control switch S. The other items of the arrangement 500a correspond to those described in context of the arrangement 100 and/or arrangement 300.

As another example, the control switch S may be implemented as a suitable field-effect transistor (FET). As a particular example, the control switch S may be implemented as n-type metal-oxide-semiconductor field-effect transistor (MOSFET) operating in the enhancement mode, the MOSFET having its gate coupled to the resistor 358, having its drain coupled to the node N2, and having its source coupled to the ground potential GND.

Figure 5b schematically illustrates an exemplifying arrangement 500b comprising an exemplifying control circuit 390b. The control circuit 390b is a variation of the control circuit 390a, further comprising a diode 394 coupling the base of the BJT 392 to the ground potential GND. The diode 394 is arranged have its forward direction towards the base of the BJT 392, i.e. the anode of the diode 394 is coupled to the ground potential GND and the cathode of the diode 394 is coupled to the base of the BJT 392. The diode 394 may facilitate issuing a control signal of desired characteristics having a sufficient duration to the base of the BJT 392 to ensure discharging the capacitive element, e.g. the capacitor 136, during operation of the arrangement 300. The exemplifying arrangement 500b generalizes into an arrangement employing any suitable component as the control switch S instead of the BJT 392, e.g. a FET having suitable characteristics.

Figure 5c schematically illustrates an exemplifying arrangement 500b comprising an exemplifying control circuit 390c. The control circuit 390c is a variation of the control circuit 390b, wherein the base of the BJT 392 is coupled to the ground potential GND via a resistor 396 instead of the diode 394. Suitably dimensioned resistor 396 may be employed instead of the diode 394 to serve the same purpose.

Since during operation of the arrangement 300 the capacitor 136 is periodically discharged, with suitable selection of the characteristics of the capacitor 136 in view of the oscillation frequency of the arrangement 300 the voltage at the capacitor 136 is discharged via the control switch S before it reaches the predetermined threshold voltage of the voltage threshold element 142 of the charge controller of the start-up circuit 180, thereby avoiding re-starting the operation of the arrangement 300 during its normal operation.

In case the lamp 162 is not in its place or a cathode of the lamp circuit 360 is broken and hence the circuit between the first and/or second pairs of terminals 164a, 164b is not closed, electric current cannot flow in the respective cathode circuit of the lamp circuit 360. Consequently, the voltage induced in the inductor 332ₛ₂ during operation of the arrangement 300 results in periodically issuing a control signal from the (second) cathode circuit to the control circuit 390, thereby causing the capacitor 136 to be periodically discharged via the control switch S. If, on the other hand, the operation of the arrangement 300 is initiated with lamp 162 not being its place and/or a cathode of the lamp circuit 360 being broken, the (second) cathode circuit receives the voltage applied at the node Vᵢₙ via the resistor 356 and, consequently, a control signal is continuously issued at the control circuit 390, thereby discharging the capacitor 136 via the control switch S.

The arrangement 300 may provide a benefit in terms of size and price of component(s) required to implement the self-oscillating bridge arrangement, in particular the control circuit comprised therein. In particular, the control switch S may be implemented e.g. using a bipolar junction transistor which is typically both smaller in size and less expensive than a diode that can be used as the diode 154 of the arrangement 100.

Another benefit provided by the arrangement 300 is that the voltage tolerance of some components of the arrangement 300 can be lower than that of corresponding components of the arrangement 100. As an example, relocating the DC capacitor as the DC capacitor 360 of the arrangement 300 instead of the DC capacitor 152 of the arrangement 100 may enable employing cathode circuit capacitors 368, 372 that are required to tolerate maximum voltages that are a fraction of the maximum voltage of the respective capacitors 168, 172 of the arrangement 100. As an example, the capacitors 368, 372 may be chosen to tolerate voltages up to approximately 100 volts, whereas the respective capacitors 168, 172 of the arrangement 100 may be required to tolerate voltages up to approximately 250 volts. As another example, different coupling between the lamp circuit 360 and the resonant circuit in the arrangement 300 compared to coupling between the lamp circuit 160 and the resonant circuit in the arrangement 100 may enable selecting a resistor component as the resistor 356 of the arrangement 300 that is required to tolerate a fraction of the maximum voltage of the corresponding resistor 174 of the arrangement 100. As an example, the resistor 356 may be chosen to tolerate voltages up to approximately 400 volts, whereas the corresponding resistor 174 of the arrangement 100 may be required to tolerate voltages up to approximately 1000 volts. Selecting components having tolerance to a lower maximum voltage is likely to provide benefits in terms of cost and size of the respective components.

The high side switch S1 of the arrangements 100 and 300 may be implemented as suitable transistor, for example as a BJT having its base coupled to the driving circuit 112, having its collector coupled to the node Vᵢₙ, and having its emitter coupled to the node N1 via the resistor 120. Similarly, the low side switch S2 of the arrangements 100 and 300 may be implemented as suitable transistor, for example as a BJT having its base coupled to the driving circuit 114, having its collector coupled to the node N1, and having its emitter coupled to the ground potential GND via the resistor 122.

The high side switch S1 may be, alternatively, implemented as a FET having its gate coupled to the driving circuit 112, having its drain coupled to the node Vᵢₙ, and having its source coupled to the node N1 via the resistor 120. Similarly, the low side switch S2 of the arrangements 100 and 300 may be alternatively implemented as a FET having its gate coupled to the driving circuit 114, having its drain coupled to the node N1, and having its source coupled to the ground potential GND via the resistor 122. In case the high side switch S1 or the low side switch S2 is implemented as a FET, the gate of the FET may be coupled to the ground potential via a suitable resistor to ensure that the voltage at the gate of the respective FET remains at a sufficient level in response to a voltage in order to close the respective FET is being issued.

The arrangements 100 and 300 may be considered as exemplifying arrangements serving to illustrate operation of the start-up circuits 180, 180a, 180b and the control circuits 390, 390a, 390b, 390c. Hence, the start-up circuit 180, 180a, 180b and/or the control circuit 390, 390a, 390b, 390c may be employed in an arrangement different from the arrangement 100 or the arrangement 300.

As an example, in a variation of the arrangement 100 or the arrangement 300 a full bridge circuit may be used instead of the half-bridge circuit 110 to supply power to the lamp circuit 160 or to the lamp circuit 360, respectively. A schematic example of a full bridge circuit is illustrated in Figure 1 b. In such an arrangement the resonant circuit and the lamp circuit 160, 360 are coupled to the full bridge circuit as the load, represented in Figure 1b by the resistor R1'. Consequently, the arrangement 100, 300 is further modified in this regard by providing driving arrangements for the first pair of switches S1' and S2' as well as for the second pair of switches S3' and S4'. The first pair of switches S1' and S2' may be driven using the circuit(s) described for the switches S1 and S2 in context of the arrangements 100 and 300 in a similar manner, whereas the second pair of switches S3' and S4' may be driven using a similar circuit(s) as for the first pair of switches S1' and S2' such that the switch S3' is driven jointly or in synchronization with the switch S2', whereas the switch S4' is driven jointly or in synchronization with the switch S1'. With the first pair of switches S1' and S2' replacing the switches S1 and S2 of the half-bridge circuit 110, the start-up circuit 180 may be coupled to a control terminal of the switch S2'. Moreover, the start-up circuit 180 may be further coupled to a control terminal of the switch S3' to enable joint or synchronized switching of the switches S2' and S3' into closed state in response to the voltage at the capacitor 136 exceeding the predetermined threshold voltage.

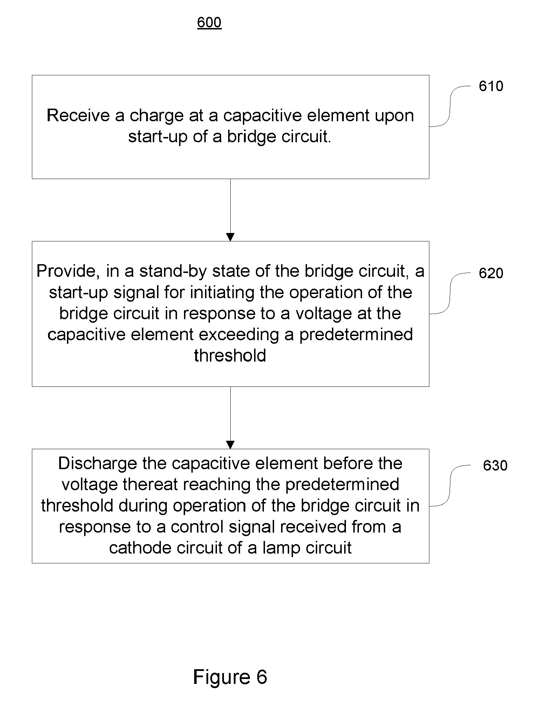

Figure 6 illustrates a method 600 in accordance with an embodiment of the invention. The method 600 may be arranged to operate a bridge circuit or an arrangement comprising the bridge circuit, such as the half-bridge circuit 110 or a full bridge circuit (as schematically illustrated in Figure 1 b) arranged to supply power to a lamp circuit. As an example, the method 600 may be arranged to operate the arrangement 300 described in detail hereinbefore. The method 600 comprises receiving a charge at a capacitive element upon start-up of the bridge circuit, as indicated in step 610. The method 600 further comprises providing a start-up signal for initiating the operation of the bridge circuit in response to a voltage at the capacitive element exceeding a predetermined threshold, as indicated in step 620. In particular, the method 600 may comprise providing said start-up signal only when the bridge circuit is to be (re)started from a stand-by state for example due to connecting the bridge circuit to a power source or due to placing a lamp in its place in the lamp circuit. In contrast, once the operation of the bridge circuit has been initiated, the bridge circuit can be considered to be in operation as opposed to the stand-by state. The method 600 further comprises discharging the capacitive element before the voltage thereat reaching the predetermined threshold during operation of the bridge circuit in response to a control signal received from a cathode circuit of the lamp, as indicated in step 630.

## Claims

**1.** A circuit for operating a bridge circuit arranged to supply power to a lamp circuit, the circuit comprising
a start-up circuit for initiating the operation of the bridge circuit, the start-up circuit comprising
a capacitive element for receiving a charge upon start-up of the bridge circuit, and
a charge controller for providing a start-up signal for initiating the operation of the bridge circuit in response to a voltage at the capacitive element exceeding a predetermined threshold; and
a control circuit for discharging the capacitive element before the voltage thereat reaching the predetermined threshold during operation of the bridge circuit,
**characterized in that** the control circuit is coupled to the start-up circuit and arranged to receive a control signal from a cathode circuit of the lamp circuit, the control circuit being configured to discharge the capacitive element in response to the control signal.

**2.** A circuit according to claim 1, wherein the capacitive element comprises one or more capacitors.

**4.** A circuit according to any of claims 1 to 3, wherein the charge controller comprises a voltage threshold element coupled between the capacitive element and a control terminal of a switch of the bridge circuit, the voltage threshold element being configured to provide the start-up signal by discharging the capacitive element to the control terminal of a switch of the bridge circuit.

**5.** A circuit according to claim 4, wherein voltage threshold element is a diac coupled between the capacitive element and the control terminal of the switch of the bridge circuit.

**6.** A circuit according to claim 1, wherein the capacitive element is coupled to a voltage source via one or more intervening components for receiving the charge upon start-up of the bridge circuit.

**7.** A circuit according to any preceding claim, wherein the control circuit is configured to periodically discharge the capacitive element during operation of the bridge circuit at least once during each operation cycle of the bridge circuit.

**8.** A circuit according to any preceding claim, wherein the control circuit is arranged to receive a control signal from the cathode circuit in response to electric current not flowing via a pair of terminals of the cathode circuit arranged to receive a lamp.

**9.** A circuit according to any preceding claim, wherein the control circuit is arranged to receive a control signal from the cathode circuit in response to a voltage induced in the cathode circuit.

**10.** A circuit according to any preceding claim, wherein the control circuit comprises a control switch connected in parallel with the capacitive element, which control switch is configured to be in closed state in response to a control signal issued thereat, thereby discharging the capacitive element via the control switch.

**11.** A circuit according to claim 10, wherein a control terminal of the control switch is arranged to receive a control signal from the cathode circuit via a resistor.

**12.** A circuit according to claim 10 or 11, wherein the control switch comprise a bipolar junction transistor.

**13.** A circuit according to any preceding claim, wherein the start-up circuit is coupled to the bridge circuit and the control circuit is coupled to the cathode circuit.

**14.** A method for operating a bridge circuit arranged to supply power to a lamp circuit, the method comprising
receiving a charge at a capacitive element upon start-up of the bridge circuit,
providing a start-up signal for initiating the operation of the bridge circuit in response to a voltage at the capacitive element exceeding a predetermined threshold; and
discharging the capacitive element before the voltage thereat reaching the predetermined threshold during operation of the bridge circuit,
**characterized in that** discharging the capacitive element comprises discharging the capacitive element in response to a control signal received from a cathode circuit of the lamp the lamp circuit.

**15.** An arrangement comprising
a bridge circuit connectable between a voltage source and a ground potential,
a resonant circuit coupled to the bridge circuit,
a lamp circuit coupled to the resonant circuit, the lamp circuit comprising a cathode circuit, and
a circuit according to any of claims 1 to 14 having the start-up circuit coupled to a control terminal of a switch of the bridge circuit and the control circuit coupled to the cathode circuit of the lamp circuit.
